**Europäisches Patentamt**

**European Patent Office**

**Office européen des brevets**

(19)

(11) Publication number : **0 601 137 B1**

(12)

# EUROPEAN PATENT SPECIFICATION

(45) Date of publication of patent specification :
06.12.95 Bulletin 95/49

(51) Int. Cl.⁶ : **F24C 7/08,** G01K 1/00,
G01K 13/00

(21) Application number : **93904418.6**

(22) Date of filing : **22.01.93**

(86) International application number :
**PCT/SE93/00046**

(87) International publication number :
**WO 93/16333 19.08.93 Gazette 93/20**

(54) **TEMPERATURE PROBE AND OVEN PROVIDED WITH SUCH PROBE.**

(30) Priority : **07.02.92 SE 9200371**

(43) Date of publication of application :
**15.06.94 Bulletin 94/24**

(45) Publication of the grant of the patent :
**06.12.95 Bulletin 95/49**

(84) Designated Contracting States :
**CH DE DK FR GB LI**

(56) References cited :
**US-A- 4 081 645**
**US-A- 4 122 322**
**US-A- 4 291 576**
**US-A- 4 294 116**
**US-A- 4 415 790**
**PATENT ABSTRACTS OF JAPAN, Vol. 6, No.
76, M-128; & JP,A,57 016 729 (MATSUSHITA
DENKI SANGYO K.K.), 28 January 1982
(28.01.82)**

(56) References cited :
**PATENT ABSTRACTS OF JAPAN, Vol. 12, No.
302, M-732; & JP,A,63 075 419 (MATSUSHITA
ELECTRIC IND CO LTD), 5 April 1988 (05.04.88)
PATENT ABSTRACTS OF JAPAN, Vol. 7, No.
179, M-234; & JP,A,58 083 132 (MATSUSHITA
DENKI SANGYO K.K.), 18 May 1983 (18.05.83)
PATENT ABSTRACTS OF JAPAN, Vol. 7, No.
199, M-240; & JP,A,58 099 623 (MATSUSHITA
DENKI SANGYO K.K.), 14 June 1983 (14.06.83)**

(73) Proprietor : **AKTIEBOLAGET ELECTROLUX
Luxbacken 1
S-105 45 Stockholm (SE)**

(72) Inventor : **LJUNGGREN, Per, Henrik
Hammarvägen 1
S-178 52 EKRÖ (SE)**
Inventor : **TIMGREN, Roland, Henry
Basunvägen 22
S-175 48 BROMMA (SE)**

(74) Representative : **Erixon, Bo et al
c/o AB ELECTROLUX Corporate Patents &
Trademarks
S-105 45 Stockholm (SE)**

## Description

The present invention pertains to a temperature probe of the kind indicated in the preamble of the appending claim 1.

According to another aspect, the invention also refers to an oven having a temperature probe and defined in the preamble of claim 3.

In domestic ovens it is common to use a temperature probe in order to sense the temperature of the foodstuff to be treated in the oven for the purpose of improving the control of the course of treatment. The probe is inserted in a piece of meat or a poultry, for example, so that the temperature sensor, which is usually disposed at the tip of the probe, will be placed essentially in the center of the piece of meat or in the center of the fleshy part of the poultry. It is namely important for the result that the lowest temperature in the food-stuff is to control the treatment.

In practice, often the tip of the probe does not end up at the point of lowest temperature but at the side of said point.

As a result, meat and poultry needed to be cooked all trough will not have the proper treatment because the oven, controlled by the temperature probe, will be prematurely switched off. In the Japanese patent application No. 58-99623 a microwave oven is disclosed which is provided with a temperature probe.

In the application it is noticed that if poultry is being treated in such oven its surface tends to become scorched while the interior of the poultry still has a condition close to raw. In order to remedy this drawback it is suggested to provide the temperature probe with an additional sensor which is disposed so that when the probe is inserted in the poultry the sensor at the tip of the probe is positioned in the center of the fleshy part of the poultry while the additional sensor is positioned adjacent to the surface of the poultry. Then, the treatment is controlled by means of the temperature values from the two sensors so that the interior of the poultry reaches the desired temperature at the same time as does the surface of the poultry. Further, it is established that from a theoretic point of view an even finer heating control can be achieved by the number of sensors being increased. In such case, however, the complexity of the control device and of the probe with ist connectors increases and for cost reasons the application with two sensors has been found rational.

The known temperature probe is intended for use together with a microwave oven and then for the control of the energy supply for the purpose of the desired temperature to be reached simultaneously inside a piece of meat and at the surface of said piece of meat. The supply of energy is controlled in accordance with a predetermined program with the use of the temperature values from the two sensors.

In an oven, heated in a traditional way, i.e. an oven provided with heating elements or a hot air fan, a temperature probe of a conventional design, will frequently end up at the wrong position inside a piece of meat, or the like, to be treated. Accordingly, it is of interest to make use of the technique described above of providing additional sensors in the probe in order to increase the chances that at least one of the sensors takes the position of lowest temperature in said piece of meat. Of course, as suggested in the publication referred to, it is possible to provide several sensors in the probe but for the reasons given above this will lead to a situation where the construction of the probe, of the connecting parts and of the control device for the energy supply will become complicated. A reasonable compromise between the desired degree of fine regulation and the cost leads to a probe having three sensors and being provided with a connector of the telephone plug type having three contact areas (sterophonic audio plug).

The object of the invention is to provide a temperature probe of the kind referred to above which makes possible for the sensed temperature, as far as possible, to equal the lowest temperature of a piece of meat, or the like, to be treated. Another object of the invention is to provide for controlled energy supply to an oven in accordance with the lowest temperature thus measured. The objects indicated will be achieved by a temperature probe having the characterizing features indicated in claim 1 and by an oven having the characterizing features indicated in claim 3-10.

The invention will now be described more in detail in connection with an embodiment with reference to the enclosed drawings, in which:

Fig. 1          shows a temperature probe with associated connector,

Fig. 2A and 2B    show alternative interconnecting arrangements for three sensors, and

Fig. 3,          finally, schematically shows an oven with a temperature probe connected thereto and with a control device for the supply of energy.

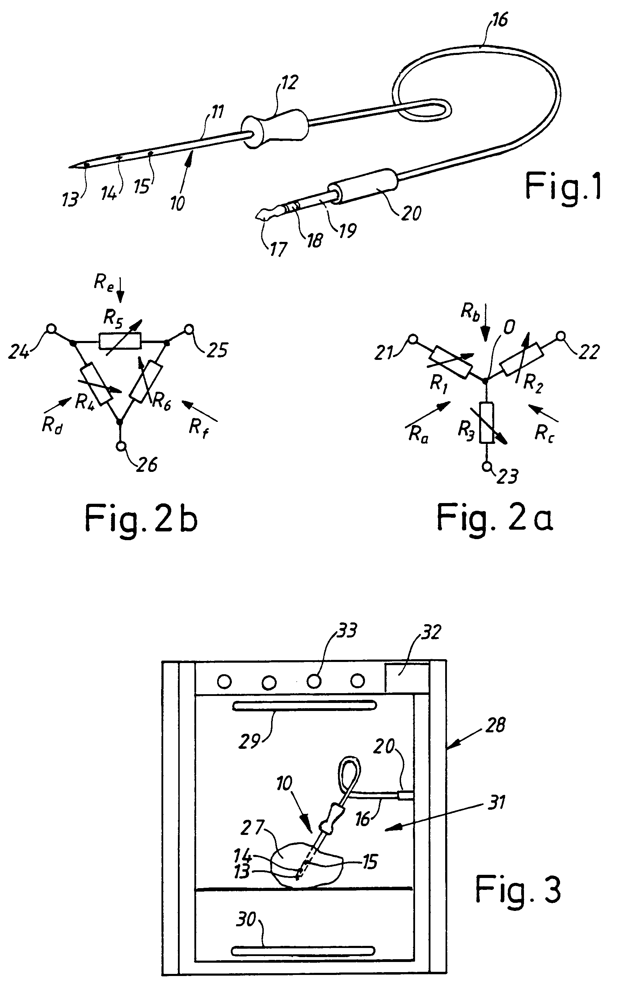

In Fig. 1 a temperature probe 10 is shown which is designed in accordance with the invention. In the conventional way, the probe comprises an elongate tubular part 11 one end of which being attached to a handle 12 whereas the opposite end is provided with a tip intended to facilitate the insertion of the probe into a foodstuff the temperature of which is to be monitored. A temperature sensor 13 is disposed at the tip and another two sensors 14,15 of the same type are provided along the tubular part 11. These sensors are resistors the resistance of which depends on temperature, referred to as thermistors. Each of the thermistors is disposed in the tubular part or housing so as to be electrically insulated from said part. In addition, each thermistor has two connecting terminals which by suitable conductors, not shown, in a cable 16 are connected to three contact areas 17,18,19 disposed on a connector 20 of the telephone plug type.

In this case, where three thermistors are present, these can be connected in Y-connection as shown in Fig. 2A. The thermistors have been designated $R_1$, $R_2$ and $R_3$ and are connected between the respective terminal 21,22,23 and a common point O. If there is a desire for a direct measurement of the resistance of the respective thermistor this can be performed by a measurement between the respective terminal and the common point O. However, such a measurement would require an additional conductive area on the connector which leads to a special design of said connector. The aim is to use, as far as possible, standard components and the connector 20 shown in Fig. 1 is such a component in the shape of a telephone plug of a sterophonic design used in audio applications. The connector offers three contact areas only which means that with the thermistors connected in Y-connection, as shown in fig. 2A, measurement can only take place between the terminals 21-23, 21-22 and 22-23, respectively. The resistances measured are designated $R_a$, $R_b$ AND $R_c$. From the circuit diagram it appears that $R_a$ is determined by $R_1$ in series with $R_3$ while, correspondingly, $R_b$ is determined by $R_1$ in series with $R_2$ and $R_c$ is determined by $R_2$ in series with $R_3$. With the designations given three mathematic formulas can be set up between $R_a$ $R_b$ and $R_c$, respectively, and the three resistance values $R_1$, $R_2$ and $R_3$ and a certain amount of calculation leads to the following formulas for the three resistances $R_1$, $R_2$ and $R_3$ as expressed in the three measured resistances $R_a$, $R_b$ and $R_c$:

$$R_1 = \tfrac{1}{2}(R_a + R_b - R_c) \qquad R_2 = \tfrac{1}{2}(R_b + R_c - R_a) \qquad R_3 = \tfrac{1}{2}(R_a - R_b + R_c)$$

An alternative connection of the three thermistors is shown in Fig. 2B according to which the thermistors hav been connected so as to form a triangle. Here, the resistances have been designated $R_4$, $R_5$ and $R_6$ whereas the corresponding terminals have been designated 24,25 and 26. The resistance values measured between the terminals 24-26, 24-25 and 25-26, respectively, have been designated $R_c$, $R_e$ and $R_f$. In this variant of connection the resistances $R_4$, $R_5$ and $R_6$ and the measured resistances are so correlated that a much more difficult calculation work is required in determining the resistance of the respective thermistor than is the case in the connection according to Fig. 2A. In this case the simplest way is to use the known formulas for transfer from triangle connection to Y-connection in order first to transform the coupling to star shape and therafter to use the formulas presented in connection with Fig. 2A for determining the resistance of the respective thermistor and of the temperatures represented by said resistance values.

In the first place, the temperature probe is intended to be used in a domestic oven and such an oven is shown schematically in Fig. 3. The tip of the probe has been inserted into a piece of meat 27 so that the three sensors will take somewhat different positions in the piece of meat, this in order for the point of lowest temperature in the piece of meat to be more easily determined. The distance between the sensors is chosen with this desire in mind and in the practical case the distance can be in the range of 1-3 centimetres. The connector 20 is connected to an outlet of a corresponding design, here referred to as a telephone jack disposed in the inner wall of said oven. The oven, designated by 28, is in the conventional way provided with heating elements 29,30 disposed in the upper and lower part, respectively, of the oven compartment, referred to by 31.

In order to control the supply of heat from the two heating elements in the oven a control device 32 is provided which conveniently comprises a microprocessor for the necessary resistance calculations to be performed. The setting of temperature and the choice of heating mode, such as bottom heat, top heat, both top heat and bottom heat, can be performed by means of suitable knobs 33. By carrying out the described measurements and then the calculations indicated the temperatures sensed by the thermistors can be determined. Then, in accordance with the invention, the oven is controlled according to the lowest of said temperature values. This means that when the temperature set has been reached in the present piece of meat, one knows with greater certainty than before that in no point in said piece of meat a lower temperature is prevailing.

By the temperature probe described it will be possible to insert same into a piece of meat, a poultry or the like without the requirement for the tip of the probe to be disposed in the exactly correct position, namely in the center of the piece of meat or the fleshy part of the poultry, which position is considered to be the latest one to reach the desired temperature. In addition, by controlling the oven according to the lowest of the sensed temperatures, the desired temperature will always be achieved in every point of the piece of meat or the poultry with greater certainty than before.

**Claims**

1. Temperature probe intended to be inserted into a foodstuff to be heated, the temperature probe (10) having the shape of a rod and supporting, at its tip and at at least one additional position, a temperature sensor

EP 0 601 137 B1

(13,14,15) of a type the resistance of which varies with the temperature, the temperature probe via a wire (16) being connected to a connector (20) of the telephone plug type which, via a corresponding jack disposed in an oven (28) provided for the heating treatment, is connectable to a control device (32) for the control of the heating process, **characterized** in that three temperature sensors (13,14,15) are provided to be supported by the probe (10) at positions suitably interspaced with respect to one another, the connector (20) having three contact areas (17,18,19) and the three temperature sensors (13,14,15) being connected to form a star or a triangle with the three terminals thus formed being connected to the respective contact area of the connector.

2. Temperature probe according to claim 1, **characterized** in that the space between the temperature sensors is in the range of 1-3 centimetres.

3. Oven for treatment of foodstuffs, comprising a temperature probe (10) intended to be inserted into a foodstuff (27) to be heated, the temperature probe having the shape of a rod and, at its tip and at least one additional position along its length, supporting a temperature sensor (13,14,15), the temperature probe (10) being connectable to a control device (32) for the control of the treatment process in the oven (28), characterized in that as a total at least three temperature sensors (13,14,15) are provided in the probe (10) suitably interspaced with respect to one another, the control device (32) being arranged to control the treatment process based on the lowest one of the temperatures sensed by the sensors.

4. Oven according to claim 3, **characterized** in that the space between the temperature sensors is in the range of 1-3 centimetres.

5. Oven according to claim 3, **characterized** in that the temperature sensors (13,14,15) are of the type the resistance of which varies with the temperature, the resistance of the sensors being in essentially the same range and, further, each sensor being connected to the control device (32) via a suitable connector (20), said control device being arranged to determine the resistace value that corresponds to the lowest temperature value by comparison of the sensed resistance values.

6. Oven according to claim 5, **characterized** in that three sensors (13,14,15) are provided and connected to form a star, the three connecting points (21,22,23) formed by the free ends of the sensors being connected to its respective contact area (17,18,19) on a connector (20) of a standardized design of the telephone plug type.

7. Oven according to claim 5, **characterized** in that thee sensors (13,14,15) are provided and connected to form a triangle, the three connecting points (24,25,26) being connected to each respective contact area (17,18,19) on a connector (20), said control device (32) being arranged to perform, by means of known transfer formulas, a transform of the triangle connection to a star connection in order to determine the resistance values of the different sensors.

8. Oven according to claim 7, **characterized** in that the three connecting points (24,25,26) are connected to each respective contact area (17,18,19) of a connector (20) in a standardized form of the telephone plug type.

9. Oven according to any of the preceding claims 3 to 8, **characterized** in that the control device (32) comprises a microprocessor.

10. Oven according to any of the preceding claims 3 to 8, **characterized** in that the oven (28) is arranged to be heated by means of thermal energy.

**Patentansprüche**

1. Temperaturmesser zum Einstecken in ein zu erhitzendes Nahrungsmittel, wobei der Temperaturmesser (10) die Form eines Stabes hat und an seiner Spitze und mindestens einer weiteren Position einen Temperatursensor (13, 14, 15) trägt, deren Widerstand sich mit der Temperatur ändert, der über ein Kabel (16) mit einem Anschluß (20) nach Art eines Telefonsteckers verbunden ist, der über eine korrespondierende in dem Backofen (28) angeordnete Buchse, die für die Wärmebehandlung vorgesehen ist, mit einer

4

Steuereinrichtung (32) zur Steuerung des Heizprozesses verbindbar ist, **dadurch gekennzeichnet**, daß drei Temperatursensoren (13, 14, 15) vorgesehen sind, die an dem Temperaturmesser (10) an geeigneten voneinander beabstandeten Positionen vorgesehen sind, der Anschlup (20) drei Kontaktbereiche (17, 18, 19) hat und die drei Temperatursensoren (13, 14, 15) miteinander verbunden sind und einen Stern oder Dreieck mit dem drei Ausgängen bilden, die mit den jeweiligen Kontaktbereichen des Anschlusses verbunden sind.

2.  Temperaturmesser nach Anspruch 1, dadurch gekennzeichnet, daß der Abstand zwischen den Temperatursensoren im Bereich von 1 bis 3 cm liegt.

3.  Backofen zur Behandlung von Nahrungsmitteln, mit einem Temperaturmesser (10) zum Einstecken in ein zu erhitzendes Nahrungsmittel (27), wobei der Temperaturmesser die Form eines Stabes hat und an seiner Spitze und längs zumindest an einer weiteren Position einen Temperatursensor (13, 14, 15) trägt und der Temperaturmesser (10) mit einer Steuereinrichtung (32) zur Steuerung des Behandlungsprozesses in dem Backofen (28) verbindbar ist, dadurch gekennzeichnet, daß zusammen mindestens drei Temperatursensoren (13, 14, 15) an dem Temperaturmesser vorgesehen und geeignet voneinander beabstandet sind, die Steuereinrichtung (32) so ausgestaltet ist, daß die Steuerung des Behandlungsprozesses auf der niedrigsten Temperatur, die durch die Sensoren ermittelt wird, basiert.

4.  Backofen nach Anspruch 3, dadurch gekennzeichnet, daß der Abstand zwischen den Temperatursensoren in einem Bereich von 1 bis 3 cm liegt.

5.  Backofen nach Anspruch 3, dadurch gekennzeichnet, daß der Widerstand der Temperatursensoren (13, 14, 15) sich mit der Temperatur ändert, der Widerstand der Sensoren im wesentlichen im gleichen Bereich ist und ferner jeder Sensor mit der Steuereinrichtung (32) über einen geeigneten Anschluß (20) verbunden ist, und die Steuereinrichtung so ausgestaltet ist, daß sie den Widerstandswert der mit dem niedrigsten Widerstandswert korrespondiert, durch einen Vergleich der ermittelten Widerstandswerte ermittelt.

6.  Backofen nach Anspruch 5, dadurch gekennzeichnet, daß drei Sensoren (13, 14, 15) vorgesehen sind und sternförmig miteinander verbunden sind, wobei die drei Verbindungspunkte (21, 22, 23), die durch die freien Enden der Sensoren gebildet werden, mit ihren jeweiligen Kontaktbereichen (17, 18, 19) auf einem Anschluß (20) verbunden sind, der nach Art eines Telefonsteckers eine standardisierte Gestalt hat.

7.  Backofen nach Anspruch 5, dadurch gekennzeichnet, daß drei Sensoren (13, 14, 15) vorgesehen sind und dreiecksförmig miteinander verbunden sind, wobei die drei Verbindungspunkte (24, 25, 26) mit dem jeweiligen Kontaktbereich (17, 18, 19) auf einem Anschluß (20) verbunden sind, die Steuereinrichtung (32) so ausgestaltet ist, daß sie mittels bekannter Umrechnungsformeln eine Transformation der Dreiecksverbindung in eine Sternverbindung durchführen kann, um die Widerstandswerte der einzelnen Sensoren zu ermitteln.

8.  Backofen nach Anspruch 7, dadurch gekennzeichnet, daß die drei Verbindungspunkte (24, 25, 26) mit dem jeweiligen Kontaktbereich (17, 18, 19) der Schaltung (20) in einer standardisierten Form nach Art eines Telefonsteckers, verbunden sind.

9.  Backofen nach einem der vorhergehenden Ansprüche 3 bis 8, dadurch gekennzeichnet, daß die Steuereinrichtung (32) eine Mikroprozessor aufweist.

10. Backofen nach einem der vorhergehenden Ansprüche 3 bis 8, dadurch gekennzeichnet, daß der Backofen (28) mittels thermischer Energie geheizt wird.

## Revendications

1.  Sonde de température destinée à être insérée dans un plat alimentaire à chauffer, la sonde de température (10) ayant la forme d'une tige et portant, à son bout et en au moins une position supplémentaire, un capteur de température (13, 14, 15) d'un type dont la résistance varie avec la température, la sonde de température étant connectée par l'intermédiaire d'un fil (16) à un connecteur (20) de type fiche téléphonique qui, par l'intermédiaire d'une fiche correspondante placée dans un four (28) prévu pour le traitement thermique, peut se connecter à un dispositif de commande (32) pour la commande du processus de chauffe, caractérisée en ce que trois capteurs de température (13, 14, 15) sont prévus pour être portés par la sonde (10) en des positions espacées de manière appropriée les unes des autres, le connecteur (20) ayant trois zones de contacts (17, 18, 19) et les capteurs de température (13, 14, 15) étant connectés pour former une étoile ou un triangle, les trois bornes ainsi formées étant connectées aux zones de contact respectives du connecteur.

2. Sonde de température selon la revendication 1, caractérisée en ce que l'espace entre les capteurs de température est dans le domaine de 1 à 3 centimètres.

3. Four pour traiter des plats alimentaires, comprenant une sonde de température (10) destinée à être insérée dans un plat alimentaire à chauffer (27), la sonde de température ayant la forme d'une tige et portant, à son bout et en au moins une position supplémentaire sur sa longueur, un capteur de température (13, 14, 15), la sonde de température (10) pouvant être connectée à un dispositif de commande (32) pour la commande du processus de traitement dans le four (28), caractérisé en ce qu'un total d'au moins trois capteurs de température (13, 14, 15) est prévu dans la sonde (10) en des positions espacées de manière appropriée les unes des autres, le dispositif de commande (32) étant agencé pour commander le processus de traitement sur la base de la plus faible des températures détectées par les capteurs.

4. Four selon la revendication 3, caractérisé en ce que l'espace entre les détecteurs de température est dans le domaine de 1 à 3 centimètres.

5. Four selon la revendication 3, caractérisé en ce que les capteurs de température (13, 14, 15) sont du type dont la résistance varie avec la température, la résistance des capteurs étant dans essentiellement le même domaine et, de plus, chaque capteur étant connecté au dispositif de commande (32) par l'intermédiaire d'un connecteur (20) approprié, ledit dispositif de commande étant agencé pour déterminer la valeur de résistance qui correspond à la plus faible valeur de température par comparaison des valeurs de résistance détectées.

6. Four selon la revendication 5, caractérisé en ce que trois capteurs (13, 14, 15) sont prévus et connectés pour former une étoile, les trois points de connexion (21, 22, 23) formés par les extrémités libres des capteurs étant connectés à leurs zones de contact respectives (17, 18, 19) sur un connecteur (20) d'un modèle standardisé du type fiche téléphonique.

7. Four selon la revendication 5, caractérisé en ce que trois capteurs (13, 14, 15) sont prévus et connectés pour former une étoile, les trois points de connexion (24, 25, 26) étant connectées à chaque zone de contact respective (17, 18, 19) sur un connecteur (20), ledit dispositif de commande (32) étant agencé pour effectuer, au moyen de formules de transfert connues, une transformation du branchement en triangle en un branchement en étoile afin de déterminer les valeurs de résistance des différents capteurs.

8. Four selon la revendication 7, caractérisé en ce que les trois points de connexion (24, 25, 26) sont connectés à leurs zones de contact respectives (17, 18, 19) sur un connecteur (20) d'un modèle standardisé du type fiche téléphonique.

9. Four selon l'une quelconque des revendications précédentes 3 à 8, caractérisé en ce que le dispositif de commande (32) comprend un microprocesseur.

10. Four selon l'une quelconque des revendications précédentes 3 à 8, caractérisé en ce que le four (28) est agencé pour être chauffé au moyen d'énergie thermique.

Fig.1

Fig.2b

Fig. 2a

Fig. 3